(19) **Europäisches Patentamt European Patent Office Office européen des brevets**

(11) **EP 1 965 057 B1**

(12) **FASCICULE DE BREVET EUROPEEN**

(45) Date de publication et mention
de la délivrance du brevet:
**28.04.2010 Bulletin 2010/17**

(51) Int Cl.:
*F02D 13/02* *(2006.01)*      *F02D 41/00* *(2006.01)*
*F02D 41/30* *(2006.01)*      *F02D 41/38* *(2006.01)*

(21) Numéro de dépôt: **08290129.9**

(22) Date de dépôt: **07.02.2008**

(54) **Procédé pour faciliter la vaporisation d'un carburant pour un moteur à combustion interne à injection directe de type diesel**

Verfahren zur Verbesserung der Verdampfung des Kraftstoffs für einen Dieselmotor mit Direkteinspritzung

Method for facilitating the vaporisation of fuel for a direct injection diesel internal combustion engine

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.02.2007 FR 0701468**

(43) Date de publication de la demande:
**03.09.2008 Bulletin 2008/36**

(73) Titulaire: **IFP**
**92852 Rueil-Malmaison Cédex (FR)**

(72) Inventeurs:
• **Walter, Bruno**
  **92700 Colombes (FR)**
• **Ranini, Alain**
  **92500 Rueil Malmaison (FR)**

(56) Documents cités:
**EP-A- 0 893 596      EP-A- 1 300 574**
**JP-A- 4 183 945**

**EP 1 965 057 B1**

**Description**

La présente invention se rapporte à un procédé pour faciliter la vaporisation d'un carburant dans un moteur à combustion interne à injection directe avec compression et autoallumage d'un mélange carburé et en particulier dans un moteur de type Diesel.

Avantageusement, elle concerne un moteur pouvant fonctionner selon deux modes de combustion, un mode de combustion homogène, en particulier HCCI (Homogeneous Combustion Compressed Ignition), et un mode de combustion conventionnelle.

Le fonctionnement selon le mode homogène, qui est préférentiellement utilisé pour les faibles et moyennes charges du moteur, consiste à injecter du carburant dans la chambre de combustion de façon très précoce (par exemple pendant la phase d'admission du moteur) de façon à obtenir un mélange homogène du carburant avec un fluide, comme de l'air ou un mélange d'air et de gaz brûlés recirculés (EGR), comme cela est décrit dans la demande de brevet EP 0 893 596.

Pour le fonctionnement avec un mode de combustion conventionnelle, préférentiellement utilisé aux charges élevées du moteur, une injection du carburant est réalisée autour du point mort haut compression du piston et une combustion classique par autoinflammation puis par diffusion se produit.
Avec ce mode de combustion, il peut être également envisagé de réaliser une injection précoce de carburant, dite "pilote", par exemple en début de phase d'admission.

En mode de combustion homogène, il est avantageux que l'injection de carburant se produise très tôt dans le cycle de fonctionnement du moteur dans le but d'obtenir un mélange homogène mais des risques de mouillage de la paroi du cylindre par le carburant injecté existent.

Ainsi, une injection de carburant en début de phase d'admission a pour avantage de pouvoir confiner le carburant injecté dans le bol que comporte habituellement le piston d'un tel moteur en limitant le contact de ce carburant avec la paroi du cylindre mais la température du fluide contenu dans la chambre de combustion n'est pas suffisante. En conséquence, le carburant injecté dans ce bol et par la suite dans la chambre de combustion peut difficilement se vaporiser.

Dans le mode de fonctionnement conventionnel, l'injection "pilote" entraîne les mêmes inconvénients relatifs aux difficultés de vaporisation du carburant injecté que ceux précédemment mentionnés.

Cette difficulté pour vaporiser le carburant peut entraîner des perturbations dans le déroulement de la combustion du mélange carburé ainsi qu'une augmentation des rejets de polluants dans l'atmosphère et une surconsommation de carburant du moteur.

Pour des moteurs à injection indirecte de type essence, il est déjà connu de réaliser une vaporisation en injectant ce carburant sous forme liquide ou sous forme de fines gouttelettes dans des gaz d'échappement contenus dans la tubulure d'admission. Au contact de ces gaz chauds, le carburant se vaporise en un brouillard et se mélange non seulement avec ces gaz mais aussi avec le fluide introduit par la suite dans la chambre de combustion du moteur.

Une telle transposition à des moteurs à injection directe est impossible compte tenu essentiellement du fait que l'injection de carburant ne peut pas se produire dans la tubulure d'admission.

Cependant, une meilleure vaporisation de carburant a essentiellement pour avantage de réduire les émissions d'oxydes de carbone (CO) et d'hydrocarbures imbrûlés (HC) lors de la combustion du mélange carburé.

La présente invention se propose de remédier aux inconvénients ci-dessus mentionnés grâce à un procédé utilisant les éléments habituellement présents dans un moteur à injection directe.

A cet effet, l'invention concerne un procédé pour faciliter la vaporisation d'un carburant dans un moteur à combustion interne à quatre temps à injection directe pouvant fonctionner selon un mode de fonctionnement homogène et un mode de fonctionnement conventionnel, ledit moteur comportant au moins un cylindre avec une chambre de combustion, au moins un moyen d'admission d'un fluide avec une tubulure d'admission et une soupape d'admission, au moins un moyen d'échappement de gaz brûlés avec une tubulure d'échappement et une soupape d'échappement, des moyens de commande en ouverture/fermeture des soupapes et des moyens d'injection de carburant, caractérisé en ce qu'il consiste :

-    au voisinage du début de la phase d'admission, à ouvrir la soupape d'admission pour admettre le fluide d'admission dans la chambre de combustion, à ouvrir la soupape d'échappement pour réintroduire dans cette chambre au moins une partie des gaz brûlés contenus dans la tubulure d'échappement,
-    avant la fin de la phase d'admission, à fermer la soupape d'échappement,
-    au voisinage de la fin de la phase d'admission, à fermer la soupape d'admission,
-    au cours de cette phase d'admission, à réaliser au moins une injection de carburant dans ladite chambre de combustion avant l'ouverture de la soupape d'échappement.

Le procédé peut consister à réaliser au moins une injection de carburant après l'ouverture de la soupape d'échappement.

Le procédé peut consister à réaliser au moins une injection de carburant après la fermeture de la soupape d'échappement.

Le procédé peut consister à réaliser une succession d'ouvertures et de fermetures de la soupape d'échappement lors de la réintroduction des gaz brûlés dans la chambre de combustion.

Le procédé peut consister, au voisinage du début de la phase d'admission du moteur, à ouvrir la soupape d'échappement avant la soupape d'admission.

Le procédé peut consister, au voisinage du début de la phase d'admission du moteur, à ouvrir la soupape d'échappement simultanément avec l'ouverture de la soupape d'admission.

Les moyens de commande d'au moins la soupape d'échappement peuvent permettre de faire varier la loi de levée de ladite soupape.

Les autres caractéristiques et avantages de l'invention seront mieux décrits à la lecture de la description qui va suivre, donnée à titre uniquement illustratif et non limitatif, et en se référant aux dessins sur lesquels :

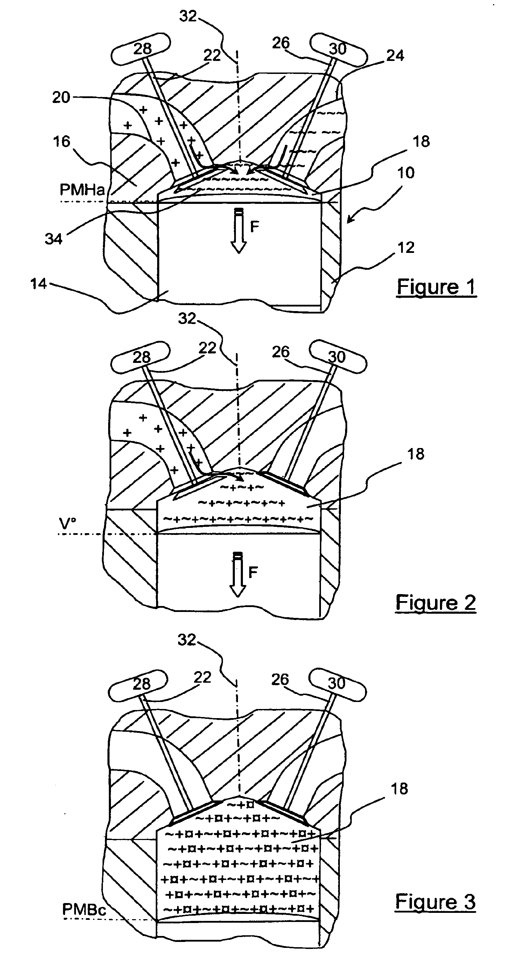

- les figures 1 à 3 sont des schémas d'un moteur à injection directe illustrant le déroulement des différentes étapes du procédé selon l'invention.

Sur les figures 1 à 3, le moteur à combustion interne montré est un moteur à combustion interne à quatre temps (ou quatre phases) à injection directe pouvant fonctionner selon deux modes de combustion, un mode de combustion homogène, en particulier HCCI (Homogeneous Combustion Compressed Ignition) et un mode de combustion conventionnelle.

Le fonctionnement selon le mode homogène, utilisé pour les faibles et moyennes charges du moteur, consiste à injecter du carburant dans la chambre de combustion de façon très précoce (par exemple pendant la phase d'admission du moteur) de façon à obtenir un mélange homogène du carburant avec un fluide, comme de l'air ou un mélange d'air et de gaz brûlés recirculés (EGR).

Pour le fonctionnement avec un mode de combustion conventionnelle, préférentiellement utilisé aux charges élevées du moteur, une injection du carburant est réalisée autour du point mort haut compression du piston et une combustion classique par autoinflammation puis par diffusion se produit. Il est également possible de réaliser une injection précoce de carburant, dite "pilote", par exemple en début de phase d'admission.

Ce moteur comprend au moins un cylindre 10 avec un corps de cylindre 12 à l'intérieur duquel coulisse un piston 14 dans un mouvement alternatif rectiligne sous l'effet d'une bielle commandée par un vilebrequin (non représentés). Le corps de cylindre est fermé, en partie haute, par une culasse 16 en délimitant une chambre de combustion 18 formée par la paroi latérale du corps de cylindre, la culasse et la partie supérieure du piston.

Par chambre de combustion, il est compris non seulement le volume défini ci-dessus mais également ce volume additionné du volume formé par un éventuel bol creux logé au sommet du piston.

La culasse porte au moins un moyen d'admission avec une tubulure d'admission 20 dont le débouché dans la chambre de combustion est contrôlé par une soupape d'admission 22. La culasse porte également au moins un moyen d'échappement avec une tubulure d'échappement 24 dont la communication avec la chambre de combustion est contrôlée par une soupape d'échappement 26.

Les soupapes d'admission et/ou d'échappement sont commandées en ouverture/fermeture par des moyens 28 et 30 permettant de faire varier les lois de levées de ces soupapes, tant au niveau de leurs moments d'ouverture/fermeture qu'au niveau de leurs levées, et cela indépendamment les unes des autres ou de manière associée. Ces moyens sont plus connus sous le sigle de VVT (Variable Valve Timing) ou VVL (Variable Valve Lift) ou VVA (Variable Valve Actuation).

Il peut être aussi envisagé de contrôler cette soupape d'échappement et éventuellement la soupape d'admission par des moyens de commande, dits "camless", qui ne comportent aucun arbre à cames. Dans ce cas, le moteur comprend un moyen d'actionnement dédié à chaque soupape, comme un actionneur à commande électromagnétique ou hydraulique ou électrohydraulique ou pneumatique ou électropneumatique, qui agit directement ou indirectement sur la tige des soupapes.

Dans l'exemple décrit en relation avec les figures 1 à 3, la soupape d'admission 22 est commandée en ouverture/fermeture par des moyens conventionnels 28, comme un arbre à cames, alors que la soupape d'échappement 26 est contrôlée par des moyens 30 permettant de faire varier sa loi de levées, en particulier par des moyens de type VVA.

Le moteur comprend également des moyens d'injection de carburant 32, de préférence sous la forme d'un injecteur multi jets (symbolisé sur la figure par un trait d'axe), qui projettent du carburant dans la chambre de combustion 18 de façon à y réaliser un mélange carburé avec le fluide qui y est contenu.

Les moyens de commandes 30 de la soupape d'échappement ainsi que les moyens d'injection de carburant 32 sont contrôlés par une unité de calcul (non représentée), plus communément appelée calculateur-moteur, que comporte habituellement un moteur. Bien entendu, dans le cas où les moyens de commandes 30 de la soupape d'admission sont des moyens de type "camless" ou du type permettant de faire varier les lois de levées de ces soupapes, le calculateur contrôlera également ces moyens de commande.

Ce calculateur a pour fonction notamment de commander en ouverture/fermeture les soupapes ainsi que de contrôler les paramètres d'injection de l'injecteur, comme le moment d'injection dans le cycle du moteur, la durée d'injection de carburant...

La description du procédé qui va suivre se fera en relation avec le moteur des figures 1 à 3.

La figure 1 montre la configuration du moteur à injection directe après la fin de la phase d'échappement de ce moteur et au début de sa phase d'admission. Dans cette configuration, le piston 14 est à son point mort haut admission (PMHa), la chambre de combustion 18 renferme des gaz brûlés 34 (ou gaz d'échappement), la tubulure d'échappement ne contient que des gaz brûlés et la tubulure d'admission contient du fluide d'admission.

A partir de cette position de PMHa, le piston 14 est entraîné sous l'effet de la bielle et du vilebrequin pour une phase d'admission durant laquelle il suit un mouvement vertical vers le bas (flèche F des figures 1 et 2) partant de son PMHa pour aller à son point mort bas compression (PMBc de la figure 3).

Au voisinage du PMHa, le calculateur contrôle les moyens de commande 30 de façon à ce que la soupape d'échappement 26 soit en position ouverte alors que la soupape d'admission 22 est conventionnellement ouverte sous l'action de l'arbre à cames 28. Dans cette position et sous l'effet du mouvement du piston 14, les gaz brûlés 34 contenus dans la tubulure d'échappement 24 et le fluide contenu dans la tubulure d'admission sont introduits dans la chambre de combustion 18.

Le calculateur commande également, pendant cette phase d'admission, au moins une injection de carburant dans la chambre de combustion par l'intermédiaire de l'injecteur 32.

Avantageusement selon l'exemple décrit, il est prévu qu'au moins une injection de carburant s'effectue dans le mélange de fluide admis et de gaz brûlés réintroduits dans la chambre de combustion avant la fermeture de la soupape d'échappement. Cette injection de carburant dans le mélange chaud fluide/gaz brûlés a pour effet de vaporiser ce carburant au contact de ce mélange tout en réduisant significativement le contact entre le carburant liquide et la paroi du cylindre.

Bien entendu et cela sans sortir du cadre de l'invention, cette injection peut se produire avant l'ouverture de la soupape d'échappement de manière à réaliser une vaporisation de ce carburant avec les gaz brûlés résiduels habituellement présents dans le volume mort de la chambre de combustion puis poursuivre cette vaporisation lors de l'introduction des gaz brûlés contenus dans la tubulure d'échappement.

Egalement, le carburant injecté peut être mis en contact avec le mélange de fluide admis et de gaz brûlés réintroduits dans la chambre de combustion après la fermeture de la soupape d'échappement pour assurer la vaporisation de ce carburant.

De manière avantageuse, il est prévu que, au début de la phase d'admission, la soupape d'échappement 26 s'ouvre avant l'ouverture de la soupape d'admission 22 dès que la distance piston/culasse le permet et plus précisément la distance entre le fond des embrèvements du piston et la surface correspondante sur la soupape. Cette soupape d'échappement se referme ensuite au point V°. L'ouverture de la soupape d'admission peut être envisagé très peu de temps après l'ouverture de la soupape d'échappement ou quasiment simultanément à la fermeture de la soupape d'échappement au point V°. Bien entendu, toutes autres configurations entre ces deux soupapes ne sont pas écartées, comme une ouverture simultanée de celles-ci au début de la phase d'admission.

Après un déplacement limité du piston 14 qui correspond à quelques dizaines de degrés d'angle de rotation de vilebrequin (V° sur la figure 2) à partir du PMHa, le calculateur commande la fermeture de la soupape d'échappement 26, la soupape d'admission 22 reste de manière conventionnelle dans sa position d'ouverture et le fluide continue d'être introduit dans la chambre de combustion 18 pour s'y mélanger avec la charge carburé. L'injecteur peut poursuivre son ou ses injection(s) de carburant dans la chambre de combustion pendant tout ou partie du mouvement descendant de ce piston. Au contact de cette charge additionné du fluide d'admission, le carburant injecté peut ainsi mieux se vaporiser sous l'effet de la température de la charge contenue dans la chambre et l'homogénéité du mélange carburé obtenu est grandement améliorée.

A la fin de cette phase d'admission, le piston 14 se trouve au voisinage du PMBc (figure 3), la soupape d'admission 22 est en position de fermeture sous l'effet de l'arbre à cames 28.

Grâce à cela, le mélange obtenu dans la chambre 18 lors de la fermeture de la soupape d'admission 22 au voisinage de la fin de la phase d'admission est un mélange fluide/carburant vaporisé qui contient une certaine quantité de gaz brûlés.

Comme cela est connu, le mode opératoire du moteur se poursuit par une phase de compression du mélange carburé avec possibilité de poursuivre les injections de carburant et la combustion.

Pendant la phase d'admission avec ouverture de la soupape d'échappement décrite ci-dessus, il peut être prévu d'injecter le carburant au fur et à mesure de l'introduction des gaz brûlés dans la chambre de combustion.

Il peut être également prévu de réaliser une succession de cycles d'ouverture/fermeture de la soupape d'échappement associés à une injection de carburant jusqu'à la fermeture programmé à V° de cette soupape. Ceci a pour effet de minimiser la baisse de température locale des gaz brûlés lorsque les calories qu'ils contiennent sont utilisées pour vaporiser le carburant injecté dans la chambre de combustion.

Bien entendu, l'homme du métier fera en sorte de fermer la soupape d'échappement à V° dans la phase d'admission du moteur de manière à ce que la quantité de gaz brûlés présents dans la chambre de combustion à la fin de cette phase n'altère pas la combustion du mélange carburé par compression et autoinflammation.

La présente invention n'est pas limitée aux exemples de réalisation décrits ci-dessus mais englobe toutes variantes et tous équivalents.

Notamment, le procédé décrit peut être utilisé avec le moteur tel que décrit dans les brevets français N° 2 818 324 et 2 818 325 du demandeur, qui comprend au moins un cylindre, un piston coulissant dans ce cylindre, une chambre de combustion délimitée sur un côté par la face supérieure du piston comprenant un téton disposé au centre d'un bol concave avec une paroi de fond raccordant la base du téton avec la paroi périphérique de ce bol. Ce moteur comprend également un injecteur pour injecter du carburant avec un angle de nappe inférieur ou égal à $2Arctg\dfrac{CD}{2F}$ où CD est le diamètre du cylindre et F la distance entre le point d'origine des jets de carburants issus de l'injecteur et la position du piston correspondant à un angle de vilebrequin de 50° par rapport au point mort haut.

## Revendications

1. Procédé pour faciliter la vaporisation d'un carburant dans un moteur à combustion interne à quatre temps à injection directe pouvant fonctionner selon un mode de fonctionnement homogène et un mode de fonctionnement conventionnel, ledit moteur comportant au moins un cylindre (10) avec une chambre de combustion (18), au moins un moyen d'admission d'un fluide avec une tubulure d'admission (20) et une soupape d'admission (22), au moins un moyen d'échappement de gaz brûlés avec une tubulure d'échappement (24) et une soupape d'échappement (26), des moyens de commande (28, 30) en ouverture/fermeture des soupapes et des moyens d'injection de carburant (32), **caractérisé en ce qu'**il consiste :

   - au voisinage du début de la phase d'admission, à ouvrir la soupape d'admission (22) pour admettre le fluide d'admission dans la chambre de combustion, à ouvrir la soupape d'échappement (26) pour réintroduire dans cette chambre au moins une partie des gaz brûlés contenus dans la tubulure d'échappement (20),
   - avant la fin de la phase d'admission, à fermer la soupape d'échappement (26),
   - au voisinage de la fin de la phase d'admission, à fermer la soupape d'admission (22),
   - au cours de cette phase d'admission, à réaliser au moins une injection de carburant dans ladite chambre de combustion avant l'ouverture de la soupape d'échappement (26).

2. Procédé selon la revendication 1, **caractérisé en ce qu'**il consiste à réaliser au moins une injection de carburant après l'ouverture de la soupape d'échappement (26).

3. Procédé selon l'une des revendications précédentes, **caractérisé en ce qu'**il consiste à réaliser au moins une injection de carburant après la fermeture de la soupape d'échappement (26).

4. Procédé selon l'une des revendications précédentes, **caractérisé en ce qu'**il consiste à réaliser une succession d'ouvertures et de fermetures de la soupape d'échappement (26) lors de la réintroduction des gaz brûlés dans la chambre de combustion (18).

5. Procédé selon l'une des revendications précédentes, **caractérisé en ce qu'**il consiste, au voisinage du début de la phase d'admission du moteur, à ouvrir la soupape d'échappement (26) avant la soupape d'admission (22).

6. Procédé selon l'une des revendications 1 à 4, **caractérisé en ce qu'**il consiste, au voisinage du début de la phase d'admission du moteur, à ouvrir la soupape d'échappement (26) simultanément avec l'ouverture de la soupape d'admission (22).

7. Procédé selon la revendication 1, **caractérisé en ce que** les moyens de commande (30) d'au moins la soupape d'échappement (26) permettent de faire varier la loi de levée de ladite soupape.

## Claims

1. A method for facilitating the vaporisation of a fuel in a direct-injection four-stroke internal combustion engine able to operate according to a homogeneous operating mode and a conventional operating mode, said engine comprising at least one cylinder (10) with a combustion chamber (18), at least one fluid intake means with an intake pipe (20) and an intake valve (22), at least one burnt gas exhaust means with an exhaust pipe (24) and an exhaust valve (26), control means (28, 30) for opening/closing valves and fuel injection means (32), **characterised in that** it consists:

   - close to the start of the intake phase, in opening the intake valve (22) in order to take in the Intake fluid into the combustion chamber, in opening the exhaust valve (26) in order to reintroduce into this chamber at least one part of the burnt gases contained in the exhaust pipe (20),
   - before the end of the intake phase, in closing the exhaust valve (26),
   - close to the end of the intake phase, in closing the intake valve (22),
   - during this intake phase, in carrying out at least one injection of fuel into said combustion chamber prior to the opening of the exhaust valve (26).

2. The method according to Claim 1, **characterised in that** it consists in carrying out at least one fuel injection after the opening of the exhaust valve (26).

3. The method according to one of the preceding claims, **characterised in that** it consists in carrying out at least one fuel injection after the closure of the exhaust valve (26).

4. The method according to one of the preceding claims, **characterised in that** it consists in carrying out a succession of openings and closures of the exhaust valve (26) during the reintroduction of the burnt gases into the combustion chamber (18).

5. The method according to one of the preceding claims, **characterised in that** it consists, close to the start of the intake phase of the engine, In opening the exhaust valve (26) before the intake valve (22).

6. The method according to one of claims 1 to 4, **characterised in that** it consists, close to the start of the intake phase of the engine, in opening the exhaust valve (26) simultaneously to the opening of the intake valve (22).

7. The method according to Claim 1, **characterised in that** the means (30) for controlling at least the exhaust valve (26) allow the lift law of said valve to be varied.

**Patentansprüche**

1. Verfahren zum Vereinfachen der Verdampfung eines Kraftstoffs in einem Viertaktverbrennungsmotor mit Direkteinspritzung, der gemäß einer homogenen Betriebsart und einer herkömmlichen Betriebsart funktionieren kann, wobei der Motor mindestens einen Zylinder (10) mit einer Verbrennungskammer (18), mindestens ein Mittel zum Fluideinlass mit einem Ansaugrohr (20) und einem Einlassventil (22), mindestens ein Mittel zum Abgasauslass mit einem Auspuffrohr (24) und einem Auslassventil (26), Steuerungsmittel (28, 30) zum Öffnen/zum Schließen der Ventile und Mittel zur Kraftstoffeinspritzung (32) umfasst, **dadurch gekennzeichnet, dass** es besteht aus:

- nahe am Beginn der Einlassphase, das Einlassventil (22) zu öffnen, um das Einlassfluid in die Verbrenlnungskammer einzulassen, das Auslassventil (26) zu öffnen, um in diese Kammer mindestens einen Teil der Abgase, die im Auspuffrohr (24) enthalten sind, erneut einzuführen,
- vor dem Ende der Einlassphase, das Auslassventil (26) zu schießen,
- nahe dem Ende der Einlassphase, das Einlassventil (22) zu schließen,
- während dieser Einlassphase mindestens eine Kraftstoffeinspritzung in die Verbrennungskammer vor dem Öffnen des Auslassventils (26) auszuführen.

2. Verfahren nach Anspruch 1, **dadurch gekennzeichnet, dass** es darin besteht, mindestens eine Kraftstoffeinspritzung nach dem Öffnen des Auslassventils (26) auszuführen.

3. Verfahren nach einem der vorhergehenden Ansprüche, **dadurch gekennzeichnet, dass** es darin besteht, mindestens eine Kraftstoffeinspritzung nach dem Schließen des Auslassventils (26) auszuführen.

4. Verfahren nach einem der vorhergehenden Ansprüche, **dadurch gekennzeichnet, dass** es darin besteht, ein Abfolge von Zyklen des Öffnens und des Schließens des Auslassventils (26) während des erneuten Einführens der Abgase in die Verbrennungskammer (18) auszuführen.

5. Verfahren nach einem der vorhergehenden Ansprüche, **dadurch gekennzeichnet, dass** es darin besteht, nahe dem Beginn der Einlassphase des Motors, das Auslassventil (26) vor dem Einlassventil (22) zu öffnen.

6. Verfahren nach einem der Ansprüche 1 bis 4 **dadurch gekennzeichnet, dass** es darin besteht, nahe dem Beginn der Einlassphase des Motors, das Auslassventil (26) gleichzeitig mit dem Öffnen des Einlassventils (22) zu öffnen.

7. Verfahren nach Anspruch 1, **dadurch gekennzeichnet, dass** es die Steuerungsmittel (30) mindestens des Auslassventils (26) ermöglichen, den Hubverlauf des Ventils zu variieren.

Figure 1

Figure 2

Figure 3

**EP 1 965 057 B1**

**RÉFÉRENCES CITÉES DANS LA DESCRIPTION**

**Documents brevets cités dans la description**

- EP 0893596 A
- FR 2818324
- FR 2818325